# EUROPEAN PATENT APPLICATION

(11) **EP 4 570 753 A1**
(43) Date of publication of application: **18.06.2025**
(21) Application number: 24760599.1
(22) Date of filing: 22.02.2024
(51) Int. Cl.: C01B 32/174, C09K 23/00, C09K 23/50

(54) **CARBON NANOTUBE DISPERSION SOLUTION AND PREPARATION METHOD THEREFOR**

(30) Priority: 23.02.2023 KR 20230024182
(71) Applicant: LG CHEM, LTD., Seoul 07336 (KR)
(72) Inventor: JANG, Young Jin, Daejeon 34122 (KR); WOO, Yu Jin, Daejeon 34122 (KR); MOK, Yeong Bong, Daejeon 34122 (KR); YANG, Young Jo, Daejeon 34122 (KR); KIM, Hyun Suk, Daejeon 34122 (KR); YOON, Ki Youl, Daejeon 34122 (KR); KIM, Eun Bum, Daejeon 34122 (KR)
(74) Representative: Hoffmann Eitle
(86) International application number: PCT/KR2024/002343
(87) International publication number: WO 2024/177410

(57) **Abstract**

The present invention relates to a carbon nanotube dispersion comprising carbon nanotubes, a dispersant and a dispersion medium, wherein the dispersant comprises a first dispersant and a second dispersant in a weight ratio of 100:10 to 100:90, the first dispersant is a dispersant comprising an N atom, the second dispersant is a compound comprising a sulfonic acid group, a hydroxyl group and an aromatic ring in a molecular structure, and a weight ratio of the carbon nanotubes and the dispersant is 100:50 to 100:500, thereby having low viscosity and a little change in viscosity over time.

## Description

### TECHNICAL FIELD

### Cross-reference to Related Applications

This application claims the benefit of Korean Patent Application No. 10-2023-0024182, filed on February 23, 2023, in the Korean Intellectual Property Office, the contents of which are incorporated herein by reference.

### Technical Field

The present invention relates to a carbon nanotube dispersion and a method for preparing the same, more particularly, to a carbon nanotube dispersion with low viscosity and a little change in viscosity over time, and a method for preparing the same.

### BACKGROUND ART

According to the increase in the technical development and demand for mobile devices, demand for secondary batteries as an energy source is being rapidly increasing. Among the secondary batteries, lithium secondary batteries having high energy density, a high voltage, long cycle lifetime and a low self-discharge rate come into commercial use and are widely used. In addition, as an electrode for such high-capacity lithium secondary batteries, research is actively being conducted on methods for improving electrode density and manufacturing electrodes with higher energy density per unit volume.

Generally, high-density electrodes are formed by molding electrode active material particles with a size of several µm to tens of µm by high-pressure press. During the molding process, the particles are deformed, and the space between the particles may be reduced, and electrolyte permeability may be easily deteriorated.

In order to solve the above-described problems, conductive materials with excellent electrical conductivity and strength are used when manufacturing electrodes. Though the conductive material is placed between the electrode active materials and undergoes a molding process, micropores between the active material particles are maintained so that the electrolyte may easily penetrate, and electrical conductivity is excellent so that resistance in the electrode may be reduced. Among the conductive materials, the use of carbon nanotubes, a fibrous carbon-based conductive material that can further reduce electrode resistance by forming an electrically conductive path within the electrode, is increasing.

Carbon nanotubes, a type of fine carbon fiber, are tubular carbon fibers with a diameter of 1 µm or less, and are expected to be applied and commercialized in various fields due to high conductivity, high tensile strength and heat resistance due to the specific structure thereof. However, carbon nanotubes have problems of low dispersibility and arising aggregation phenomenon due to strong van der Waals attraction between carbon nanotubes due to the high specific surface area thereof.

To solve the problems, a method for dispersing carbon nanotubes in a dispersion medium through mechanical dispersion treatment such as ultrasonic treatment has been proposed. However, in the case of the mechanical dispersion treatment method, there is a problem in that the carbon nanotubes aggregate as soon as the ultrasonic irradiation is terminated.

Accordingly, there is a need to develop a method for preparing a carbon nanotube dispersion that can improve the dispersibility of carbon nanotubes, have low viscosity and suppress the increase in viscosity over time.

### DISCLOSURE OF THE INVENTION

### TECHNICAL PROBLEM

The present invention is to solve the above-described problems and to provide a carbon nanotube dispersion with excellent dispersibility, low viscosity and a little change in viscosity over time, by including a dispersant containing an N atom and a compound containing a sulfonic acid group, a hydroxyl group and an aromatic ring in a molecular structure.

In addition, the present invention is to provide a negative electrode slurry composition for a lithium secondary battery, including the carbon nanotube dispersion.

In addition, the present invention is to provide a method for preparing the carbon nanotube dispersion.

### TECHNICAL SOLUTION

To solve the above-described task, the present invention provides a carbon nanotube dispersion.
[1] The present invention provides a carbon nanotube dispersion comprising carbon nanotubes, a dispersant and a dispersion medium, wherein the dispersant comprises a first dispersant and a second dispersant in a weight ratio of 100:10 to 100:90, the first dispersant is a dispersant comprising an N atom, the second dispersant is a compound comprising a sulfonic acid group, a hydroxyl group and an aromatic ring in a molecular structure, and a weight ratio of the carbon nanotubes and the dispersant is 100:50 to 100:500.
[2] The present invention provides the carbon nanotube dispersion according to [1], wherein a specific surface area (BET) of the carbon nanotubes is 800 m²/g or more.
[3] The present invention provides the carbon nanotube dispersion according to [1] or [2], wherein the carbon nanotubes are single-walled carbon nanotubes.
[4] The present invention provides the carbon nanotube dispersion according to any one of [1] to [3], wherein 0.1 parts by weight to 5 parts by weight of the carbon nanotubes are comprised on the basis of 100 parts by weight of the carbon nanotube dispersion.
[5] The present invention provides the carbon nanotube dispersion according to any one of [1] to [4], wherein the first dispersant is one or more selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, and polyethylenimine.
[6] The present invention provides the carbon nanotube dispersion according to any one of [1] to [5], wherein the second dispersant is a lignosulfonate compound.
[7] The present invention provides the carbon nanotube dispersion according to any one of [1] to [6], wherein the second dispersant is sodium lignosulfonate, calcium lignosulfonate, or a mixture thereof.
[8] The present invention provides the carbon nanotube dispersion according to any one of [1] to [7], wherein the dispersant comprises the first dispersant and the second dispersant in a weight ratio of 100:20 to 100:80.
[9] The present invention provides the carbon nanotube dispersion according to any one of [1] to [8], wherein a weight ratio of the carbon nanotubes and the dispersant is 100:100 to 100:300.
[10] The present invention provides the carbon nanotube dispersion according to any one of [1] to [9], wherein a weight ratio of the carbon nanotubes and the dispersant is 100:120 to 100:250.
[11] The present invention provides the carbon nanotube dispersion according to any one of [1] to [10], wherein the dispersion medium is one or more selected from the group consisting of an amide-based polar organic solvent, an alcohol-based solvent, a glycol-based solvent, a glycol ether-based solvent, a ketone-based solvent, an ester-based solvent, and an aqueous solvent.
[12] The present invention provides the carbon nanotube dispersion according to any one of [1] to [11], wherein a viscosity of the carbon nanotube dispersion is 1,000 cP to 16,000 cP.
   In addition, in order to solve the other task, the present invention provides an electrode slurry composition for a lithium secondary battery, comprising the carbon nanotube dispersion.
[13] The present invention provides an electrode slurry composition for a lithium secondary battery, the composition comprising the carbon nanotube dispersion according to any one of [1] to [12] and an electrode active material.
   In addition, in order to solve the other task, the present invention provides a method for preparing a carbon nanotube dispersion.
[14] The present invention provides a method for preparing the carbon nanotube dispersion of any one of [1] to [12], the method comprising: (1) a step of mixing carbon nanotubes, a dispersant and a dispersion medium to prepare a mixture; and (2) a step of dispersing the mixture, wherein the dispersant comprises a first dispersant and a second dispersant in a weight ratio of 100:10 to 100:90, the first dispersant is a dispersant comprising an N atom, the second dispersant is a compound comprising a sulfonic acid group, a hydroxyl group and an aromatic ring in a molecular structure, and a weight ratio of the carbon nanotubes and the dispersant is 100:50 to 100:500.

### ADVANTAGEOUS EFFECTS

The carbon nanotube dispersion of the present invention includes a dispersant containing an N atom and a compound containing a sulfonic acid group, a hydroxyl group and an aromatic ring in a molecular structure together, and has excellent dispersibility of the carbon nanotubes, low viscosity and a little change in viscosity over time, and thus is advantageous in storing and using the carbon nanotube dispersion.

### BEST MODE FOR CARRYING OUT THE INVENTION

Words or terms used in the present description and claims shall not be interpreted as the meaning defined in commonly used dictionaries. The words or terms should be interpreted as having a meaning that is consistent with the technical idea of the present invention, based on the principle that an inventor may properly define the meaning of the words or terms to best explain the invention.

The terminology used in the present description is for the purpose of describing exemplary embodiments only and is not intended to limit the present invention. Singular expressions include plural expressions unless the context clearly indicates otherwise.

In the present description, terms such as "comprise," "include," and "have" are intended to designate the presence of implemented features, numbers, steps, components or a combination thereof, and it should be understood that the terms do not preclude the possibility of the presence or addition of one or more other features, numbers, steps, components or a combination thereof.

In the present description, "%" means wt% unless explicitly stated otherwise.

In the present description, an average particle size "D₅₀" means a particle size corresponding to 50% of an accumulated volume, and "D₉₀" means a particle size corresponding to 90% of an accumulated volume. The "D₅₀" and "D₉₀" may be measured using, for example, a laser diffraction method. The laser diffraction method is generally capable of measuring the particle size from a submicron region to several millimeters, and may obtain results with high reproducibility and high resolution.

In the present description, a "specific surface area" is measured by a BET method and may particularly be computed from the amount of nitrogen gas absorption under the temperature of a liquid nitrogen (77K) using BELSORP-mino II of BEL Japan.

Hereinafter, the present invention will be explained in particular.

The carbon nanotube dispersion according to the present invention is a carbon nanotube dispersion comprising carbon nanotubes (CNT), a dispersant and a dispersion medium, wherein the dispersant comprises a first dispersant and a second dispersant in a weight ratio of 100:10 to 100:90, the first dispersant is a dispersant containing an N atom, the second dispersant is a compound containing a sulfonic acid group, a hydroxyl group and an aromatic ring in a molecular structure, and a weight ratio of the carbon nanotubes and the dispersant is 100:50 to 100:500.

### Carbon Nanotube Dispersion

Hereinafter, each component of the carbon nanotube dispersion of the present invention will be described in particular.

### (1) Carbon Nanotubes

The term "carbon nanotubes" used in the present invention is a secondary structure formed by aggregating carbon nanotube units in whole or in part to form a bundle, and the carbon nanotube units have graphite sheets having a cylinder shape with a nano size diameter and have a sp² bonding structure. In this case, according to the angle and structure of the rolled-up graphite sheets, the properties of a conductor or a semiconductor may be shown. The carbon nanotube units may be classified into single-walled carbon nanotubes (SWCNT), double-walled carbon nanotubes (DWCNT) and multi-walled carbon nanotubes (MWCNT) according to the bonding number forming a wall.

The term "bundle type" used in the present invention refers to a secondary shape of a bundle or rope type, in which multiple carbon nanotube units are arranged in parallel, wherein the axes of the length direction of the units are arranged in substantially the same direction, or twisted or entangled after the arrangement. A "Non-bundle type or entangled type" refers to an entangled type of carbon nanotube units without a certain shape like a bundle or rope type.

Carbon nanotubes have high conductivity, but have high cohesiveness due to van der Waals forces that occur between carbon nanotubes. If a conductive material is aggregated, a conductive path may not be properly formed, and a relatively more conductive material is used, which reduces the amount of an active material and deteriorates the performance of an electrode. Accordingly, there were difficulties in commercializing carbon nanotubes as conductive materials.

The carbon nanotube dispersion according to the present invention includes a dispersant containing an N atom and a compound containing a sulfonic acid group, a hydroxyl group and an aromatic ring in a molecular structure, and may suppress the change in viscosity over time of the carbon nanotube dispersion, thereby exhibiting a low viscosity increasing ratio and advantageous effects in storing and using the carbon nanotube dispersion.

In addition, if the carbon nanotube dispersion according to the present invention is applied to the preparation of an electrode slurry, carbon nanotubes are positioned uniformly between active materials, and the minute spaces between electrode active materials may be maintained constant during preparing an electrode by coating and drying the electrode slurry and rolling. In addition, since the carbon nanotubes are distributed uniformly without aggregation, a conductive path may be sufficiently formed with a small amount of the carbon nanotubes.

The carbon nanotube dispersion according to an embodiment of the present invention may include one or more among single-walled, double-walled and multi-walled carbon nanotube units, particularly, single-walled carbon nanotubes (SWCNT).

The carbon nanotubes may have a specific surface area (BET) of 800 m²/g or more, particularly, a specific surface area (BET) of 800 m²/g to 2,000 m²/g. Since the carbon nanotube dispersion of the present invention includes a dispersant containing an N atom and a compound containing a sulfonic acid group, a hydroxyl group and an aromatic ring in a molecular structure together, excellent dispersibility is exhibited, and accordingly, excellent dispersibility with respect to carbon nanotubes having a high specific surface area (BET) of 800 m²/g or more may be exhibited, the carbon nanotube dispersion may exhibit low viscosity, and the effect of a little change in viscosity over time may be shown.

The carbon nanotubes may be included in 0.1 parts by weight to 5 parts by weight, particularly, 0.2 parts by weight to 3 parts by weight, more particularly, 0.4 parts by weight to 2 parts by weight on the basis of 100 parts by weight of the conductive material dispersion.

Since the carbon nanotube dispersion according to an embodiment of the present invention includes a dispersant having excellent dispersibility, excellent dispersibility may be shown with respect to carbon nanotubes having a high specific surface area, and carbon nanotubes having a high specific surface area may be dispersed uniformly. The carbon nanotube dispersion may have the high content of carbon nanotubes like the above-described range compared to the conventional generally used one. If a carbon nanotube dispersion having the low carbon nanotube content is used for preparing an electrode slurry, the solid content of the electrode slurry prepared may decrease, the thickness (wet thickness) after coating the electrode slurry and prior to drying may become thick, and a rolling ratio measured after conducting subsequent drying and rolling treatment may become high, which may induce a large difference in the thickness ratio before and after the drying and rolling. Like this, if the rolling ratio increases, components in the slurry including a positive electrode active material may be damaged during processing, and defects of deteriorating the performance of an electrode may occur.

### (2) Dispersant

The carbon nanotube dispersion according to the present invention includes a first dispersant and a second dispersant together in a weight ratio of 100:10 to 100:90, as dispersants for improving the dispersibility of the carbon nanotubes. In addition, the first dispersant is a dispersant including an N atom, and the second dispersant is a compound including a sulfonic acid group, a hydroxyl group and an aromatic ring in a molecular structure.

The dispersant including an N atom, included as the first dispersant, and the compound including a sulfonic acid group, a hydroxyl group and an aromatic ring in a molecular structure, included as the second dispersant are dispersants in the carbon nanotube dispersion, which play the role of increasing the dispersibility of the carbon nanotubes, and may exhibit suppressing effects of the increase in viscosity and the change in viscosity over time of the carbon nanotube dispersion.

Particularly, the carbon nanotube dispersion according to the present invention additionally includes the compound including a sulfonic acid group, a hydroxyl group and an aromatic ring in a molecular structure, as the second dispersant, in addition to the dispersant including an N atom, as the first dispersant, and may exhibit excellent dispersibility compared to a carbon nanotube dispersion including only the conventionally commonly used dispersant, and may exhibit low particle aggregation of a slurry composition, low sedimentation rate, low viscosity and excellent adhesiveness with a separator base.

Since the second dispersant includes a sulfonic acid group, a hydroxyl group and an aromatic ring together in a molecular structure, the viscosity of a carbon nanotube dispersion, particularly, an aqueous carbon nanotube dispersion may be reduced, and viscosity increase over time may be significantly improved, due to the bulky structure of the compound and the influence by the sulfonic acid group and the hydroxyl group.

As the first dispersant, the dispersant containing an N atom may be used, and if the dispersant containing an N atom in a structure, that is, a specific dispersant containing an amine structure, an amide structure, an imine structure, an ammonium structure, or the like is applied as the first dispersant, further improved viscosity improving effect and the suppressing effect of viscosity change over time may be exhibited. The dispersant containing an N atom may be dissolved in water and may be, for example, one or more selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, and polyethylenimine.

In addition, as the second dispersant, a compound including a sulfonic acid group, a hydroxyl group and an aromatic ring in a molecular structure may be used, and the compound including a sulfonic acid group, a hydroxyl group and an aromatic ring in a molecular structure may be a lignosulfonate compound. The second dispersant may be, for example, sodium lignosulfonate, calcium lignosulfonate or a mixture thereof.

If the dispersant includes the dispersant including an N atom, as the first dispersant, and the compound including a sulfonic acid group, a hydroxyl group and an aromatic ring in a molecular structure, as the second dispersant, the interaction between the aromatic ring and the carbon nanotubes in the carbon nanotube dispersion and the interaction by the hydrogen bond between the hydroxyl group and the polymer dispersant may achieve balance properly, and the viscosity decrease and the suppressing effect of viscosity increase over time of the carbon nanotube dispersion may be exhibited. In addition, the sulfonic acid group exhibiting a negative charge may induce electrostatic shielding effect and may suppress the aggregation between carbon nanotubes.

The dispersant includes the first dispersant and the second dispersant in a weight ratio of 100:10 to 100:90, and may particularly include in a weight ratio of 100:10 to 100:80 or 100:20 to 100:80, more particularly, in a weight ratio of 100:20 to 100:50. If the carbon nanotube dispersion includes the first dispersant and the second dispersant in the weight ratio, as the dispersants, carbon nanotubes may be dispersed uniformly in the carbon nanotube dispersion, and viscosity may be low and viscosity may be maintained to a certain level over time.

The weight ratio of the carbon nanotubes and the dispersant may be 100:80 to 100:500, particularly, 100:100 to 100:400, 100:100 to 100:300, 100:100 to 100:250, 100:120 to 100:300, or 100:120 to 100:250, more particularly, 100:120 to 100:200.

If the dispersant is included in an excessive amount beyond the range, due to the excessive dispersant, if the carbon nanotube dispersion is applied to an electrode, the conductivity of the electrode may be inhibited, and the dispersant may act as impurities in the electrode. On the contrary, if the dispersant is included in a small amount compared to the range, dispersibility increasing effect, viscosity decreasing effect and the suppressing effect of the viscosity change over time may become insufficient.

### (3) Dispersion Medium

The dispersion medium is a dispersion medium for dispersing the carbon nanotubes and the dispersant, and carbon nanotubes are primarily dispersed to be provided as a carbon nanotube dispersion, in order to prevent aggregation in case of applying the carbon nanotubes with a power type as they are to an electrode slurry composition.

The dispersion medium may use one that can dissolve or disperse the carbon nanotubes and the dispersant at a certain level or higher. The dispersion medium may be included in an amount such that the electrode slurry composition may have proper viscosity in view of the coatability of the electrode slurry composition subsequently prepared using the carbon nanotube dispersion.

The dispersion medium may use any one commonly used in this art for the purpose of dispersing the carbon nanotubes and the dispersant, without specific limitation, and may be, for example, at least one selected from the group consisting of an amide-based polar organic solvent, an alcohol-based solvent, a glycol-based solvent, a glycol ether-based solvent, a ketone-based solvent, an ester-based solvent and an aqueous solvent.

The amide-based polar organic solvent may be one or more selected from the group consisting of dimethyl formamide (DMF), diethyl formamide, dimethyl acetamide (DMAc), N-methyl pyrrolidone (NMP), 3-methoxy-N,N-dimethylpropanamide (Equamide M100, product of idemitsu Kosan Co.) and 3-butoxy-N,N-dimethylpropanamide (Equamide B100, product of idemitsu Kosan Co.).

The alcohol-based solvent may be at least one selected from the group consisting of methanol, ethanol, 1-propanol, 2-propanol (or isopropyl alcohol), 1-butanol, 2-methyl-1-propanol, 2-butanol, 1-methyl-2-propanol, pentanol, hexanol, heptanol, octanol, glycerin, trimethylolpropane, pentaerythritol and sorbitol.

The glycol-based solvent may be at least one selected from the group consisting of ethylene glycol, diethyl glycol, triethylene glycol, propylene glycol, 1,3-propanediol, 1,3-butanediol, 1,5-pentanediol and hexylene glycol.

The glycol ether-based solvent may be at least one selected from the group consisting of ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether and tetraethylene glycol monobutyl ether.

The ketone-based solvent may be at least one selected from the group consisting of acetone, methyl ethyl ketone, methyl propyl ketone and cyclopentanone.

The ester-based solvent may be at least one selected from the group consisting of ethyl acetate, gamma-butyrolactone and epsilon-propiolactone.

In addition, the aqueous solvent may be water.

The carbon nanotube dispersion of the present invention, including the above-described components has excellent dispersibility, low viscosity of the dispersion and a little increasing degree in viscosity over time.

If measured at 1 rpm using Rotor 1 at 25°C using a viscometer (product of TOKI SANGYO Co., viscometer TV-25), the carbon nanotube dispersion may have a viscosity of 1,000 to 15,000 cps, particularly, 3,000 to 14,500 cps, more particularly, 5,000 to 14,300 cps. If the carbon nanotube dispersion has the viscosity in the range, an electrode slurry may be prepared more easily by using the same, and an electrode slurry including the carbon nanotube dispersion may have proper viscosity for forming an electrode.

In addition, if measured at 1 rpm using Rotor 1 at 25°C using a viscometer (product of TOKI SANGYO Co., viscometer TV-25) after 1 week from the preparation, the carbon nanotube dispersion may have a viscosity of 2,000 to 16,000 cps, particularly, 3,000 to 15,500 cps, more particularly, 5,000 to 15,000 cps.

In addition, after standing for 1 week at 25°C, the carbon nanotube dispersion may have the increasing ratio of the viscosity of 20% or less, particularly, 10% or less, more particularly, 5% or less.

### Method for Preparing Carbon Nanotube Dispersion

Hereinafter, the method for preparing a carbon nanotube dispersion will be explained. The method for preparing a conductive material dispersion according to the present invention comprises: (1) a step of mixing carbon nanotubes, a dispersant and a dispersion medium to prepare a mixture; and (2) a step of dispersing the mixture. Here, the dispersant comprises a first dispersant and a second dispersant in a weight ratio of 100:10 to 100:90, the first dispersant is a dispersant comprising an N atom, the second dispersant is a compound comprising a sulfonic acid group, a hydroxyl group and an aromatic ring in a molecular structure, and a weight ratio of the carbon nanotubes and the dispersant is 100:50 to 100:500.

In step (1), carbon nanotubes, a dispersant and a dispersion medium are mixed to prepare a mixture.

The step for preparing the mixture may be performed at temperature conditions where physical properties including the viscosity of the mixture are not changed by the evaporation of the dispersion medium, for example, at a temperature of 50°C or less, more particularly, 5°C to 50°C.

In step (2), the mixture is dispersed to prepare a carbon nanotube dispersion.

The dispersion may be performed by a method using milling such as a ball mill, a bead mill, a disc mill, a basket mill, and a high pressure homogenizer, more particularly, by a milling method using disc mill or a high pressure homogenizer.

During milling by the bead mill, the size of beads may be suitably determined depending on the type and amount of the carbon nanotubes and the type of the dispersant, and particularly, the diameter of the beads may be 0.1 mm to 5 mm, more particularly, 0.5 mm to 4 mm. In addition, the milling process may be performed at a rate of 1,000 rpm to 15,000 rpm, more particularly, at a rate of 2,000 rpm to 12,000 rpm. The dispersion process may be performed according to the dispersion degree of the carbon nanotube dispersion, and may be performed for 30 minutes to 120 minutes, more particularly, for 60 minutes to 90 minutes.

The milling by the high pressure homogenizer may be performed by, for example, pressurizing the mixture with a plunger pump of the high pressure homogenizer and pushing it through the gap of a homogenization valve, and by the force of cavitation, shear, impact and explosion during passing through the gap. The pressure of the high pressure homogenizer may be 5,000 psi to 40,000 psi, particularly, 10,000 psi to 30,000 psi, more particularly, 14,000 psi to 25,000 psi. The dispersion through the high pressure homogenizer may be performed for 1 to 15 times, particularly, 2 to 10 times, more particularly, 3 to 7 times.

### Electrode Slurry Composition

In addition, the present invention provides an electrode slurry composition for a lithium secondary battery, including the carbon nanotube dispersion and an electrode active material.

The electrode slurry composition for a lithium secondary battery may be a positive electrode slurry composition or a negative electrode slurry composition, particularly, a negative electrode slurry composition.

The electrode slurry composition for a lithium secondary battery may include the carbon nanotube dispersion, a positive electrode active material or a negative electrode active material as the electrode active material, a binder, if needed, a solvent and/or other additives.

As the positive electrode active material, positive electrode active materials well-known in this art may be used without limitation, and may use, for example, lithiumcobalt-based oxides, lithiumnickel-based oxides, lithiummanganese-based oxides, lithiumironphosphor oxides, lithium nickelmanganesecobalt-based oxides or a combination thereof. Particularly, as the positive electrode active material, LiCoO₂, LiNiO₂, LiMn₂O₄, LiCoPO₄, LiFePO₄, LiNiaMnbCocO₂ (here, 0 < a, b, c < 1), without limitation.

As the negative electrode active material, at least one or at least two negative electrode active materials selected from the group consisting of: carbonaceous materials such as natural graphite and artificial graphite; lithium-containing titanium composite oxide (LTO); metals (Me) such as Si, Sn, Li, Zn, Mg, Cd, Ce, Ni and Fe; alloys composed of the metals (Me); oxides (MeOx) of the metals (Me); and composites of the metals (Me) and carbon, may be included. The negative electrode active material may be included in 60 to 98 wt%, more preferably, 70 to 98 wt% based on the total weight of the solid content excluding the solvent in the negative electrode slurry.

The binder is a component assisting the bond between the active material and the conductive material, and the bonding to a current collector and is generally added in 1 to 30 wt% based on the total weight of a mixture including an electrode active material. Examples of the binder may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene ter polymer (EPDM), a sulfonated EPDM, a styrene-butadiene rubber, a fluoro rubber, and various copolymer.

The solvent may be an organic solvent including N-methyl pyrrolidone (NMP), dimethyl formamide (DMF), acetone, dimethyl acetamide, or the like, or water, and one or a mixture of two or more thereof may be used. The amount of the solvent may be sufficient if an electrode active material, a binder and a conductive material are dissolved or dispersed considering the application thickness of a slurry and a preparation yield.

The viscosity controlling agent may be carboxymethyl cellulose, polyacrylic acid, or the like, and the viscosity of the electrode slurry may be controlled so that the preparation of the electrode slurry and a coating process on the electrode current collector may be easy due to the addition.

The filler is a component suppressing the expansion of the electrode and selectively used, and uses any one that does not induce chemical change to the battery and is a fibrous material, without specific limitation. For example, olefin-based polymers such as polyethylene and polypropylene; and fibrous materials such as glass fiber and carbon fiber are used.

If the electrode slurry composition is the composition of a positive slurry for forming a positive electrode, the composition of a positive electrode is applied on a positive electrode current collector, dried and undergone rolling to manufacture a positive electrode. Otherwise, the positive electrode slurry may be cast on a separate support, and then, a film obtained by separating from the support may be laminated on the positive electrode current collector.

The thickness of the positive electrode active material layer formed by the positive electrode slurry may be changed depending on a loading amount, a loading rate, or the like for applying the positive electrode slurry.

The positive electrode current collector may generally have a thickness of 3 µm to 500 µm. The positive electrode current collector may include a material having high conductivity without inducing chemical change to the battery, without specific limitation. For example, stainless steel, aluminum, nickel, titanium, baked carbon, or aluminum or stainless steel surface treated with carbon, nickel, titanium, silver or the like, may be used. In addition, the positive electrode current collector may reinforce the adhesive strength of the positive electrode active material by forming minute embossing on the surface of the positive electrode current collector, and various types including a film, a sheet, a foil, a net, a porous body, a foamed body and a nonwoven fabric may be used.

If the electrode slurry composition is the composition of a negative slurry for forming a negative electrode, the composition of a negative electrode may be applied on a negative electrode current collector, dried and undergone rolling to manufacture a negative electrode. Otherwise, the negative electrode slurry may be cast on a separate support, and then, a film obtained by separating from the support may be laminated on the negative electrode current collector.

The thickness of the negative electrode active material layer formed by the negative electrode slurry may be changed depending on a loading amount, a loading rate, or the like, for applying the negative electrode slurry.

The negative electrode current collector may generally have a thickness of 3 µm to 500 µm. The negative electrode current collector may use any one having high conductivity without inducing chemical change to the battery, without specific limitation. For example, copper, stainless steel, aluminum, nickel, titanium, baked carbon, copper or stainless steel surface treated with carbon, nickel, titanium, silver or the like, or an aluminum-cadmium alloy may be used. In addition, like the negative electrode current collector, minute embossing may be formed on the surface of the negative electrode current collector to reinforce the adhesive strength of the negative electrode active material, and various types including a film, a sheet, a foil, a net, a porous body, a foamed body and a nonwoven fabric may be used.

### Lithium Secondary Battery

A lithium secondary battery includes a positive electrode, a negative electrode, a separator disposed between the positive electrode and the negative electrode, and an electrolyte. Since the positive electrode and the negative electrode are the same as described above, particular explanation thereon will be omitted.

The separator is for separating the negative electrode and the positive electrode and for providing the moving passage of lithium ions, and uses any separators used in common lithium secondary batteries, without specific limitation, and particularly, separators having low resistance to the movement of electrolyte ions and excellent electrolyte impregnation capacity are preferable. Particularly, a porous polymer film, for example, a porous polymer film formed by a polyolefin-based polymer such as an ethylene homopolymer, a propylene homopolymer, an ethylene/butene copolymer, an ethylene/hexene copolymer and an ethylene/methacrylate copolymer, or a laminated structure of two or more thereof may be used. In addition, a common nonwoven fabric, for example, a non-woven fabric formed of a high melting point glass fiber, a polyethylene terephthalate fiber or the like may be used. In addition, a separator coated with and including a ceramic component or a polymer material for securing heat resistance or mechanical strength may be used, and selectively, a single layer or a multilayer structure may be used.

The electrolyte may include an organic liquid electrolyte, an inorganic liquid electrolyte, a solid polymer electrolyte, a gel-type polymer electrolyte, a solid inorganic electrolyte, a molten inorganic electrolyte or the like, which can be used during manufacturing a lithium secondary battery, without limitation. Particularly, the electrolyte may include an organic solvent and a lithium salt.

The organic solvent may use any one which may play the role of a medium for moving ions involving the electrochemical reaction of a battery, without specific limitation. Particularly, as the organic solvent, ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethylcarbonate (DMC), diethylcarbonate (DEC), ethyl methyl carbonate (EMC), ethylene carbonate (EC), and propylene carbonate (PC); alcohol-based solvents such as ethyl alcohol and isopropyl alcohol; nitriles such as R-CN (R is a hydrocarbon group of a linear, branched or cyclic structure of C2 to C20 and may include a double bond, an aromatic ring or an ether bond); amides such as dimethylformamide; dioxolanes such as 1,3-dioxolane; or sulfolanes may be used. Among them, the carbonate-based solvent is preferable, and a mixture of a cyclic carbonate having high ionic conductivity and high dielectricity for improving the charge and discharge performance of a battery (for example, ethylene carbonate or propylene carbonate), and a linear carbonate-based compound of a low viscosity (for example, ethyl methyl carbonate, dimethyl carbonate or diethyl carbonate) is more preferable. In this case, if the cyclic carbonate and the chain-type carbonate are mixed in a volume ratio of about 1:1 to about 1:9 and used, the excellent performance of the electrolyte may be exhibited.

The lithium salt may use any compounds that may provide lithium ions used in a lithium secondary battery, without specific limitation. Particularly, the lithium salt may use LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂ or the like. The concentration of the lithium salt may be in a range of 0.1 M to 2.0 M. If the concentration of the lithium salt is within the range, the electrolyte may have appropriate conductivity and viscosity to exhibit excellent electrolyte performance, and the lithium ions may move effectively.

In the electrolyte, one or more additives may be further included in addition to the constituent components of the electrolyte for the purpose of improving the lifetime characteristics of a battery, suppressing the reduction of battery capacity, and improving the discharge capacity of a battery, for example, haloalkylene carbonate-based compounds such as difluoroethylene carbonate, pyridine, triethyl phosphite, triethanolamine, cyclic ether, ethylenediamine, n-glyme, hexaphosphate, nitrobenzene derivatives, sulfur, a quinone imine dye, N-substituted oxazolidinone, N,N-substituted imidazolidine, ethylene glycol dialkyl ether, ammonium salts, pyrrole, 2-methoxyethanol or aluminum trichloride. In this case, the additive may be included in 0.1 wt% to 5 wt% on the basis of the total weight of the electrolyte.

In the lithium secondary battery including the electrode formed by using the carbon nanotube dispersion according to the present invention, particularly, a lithium secondary battery including the negative electrode formed by using the carbon nanotube dispersion, carbon nanotubes are dispersed uniformly in the negative electrode, the content thereof may be reduced compared to a case of including the conventional conductive material such as the conductive carbon black, and discharge capacity and output properties may be stably shown. As a result, the lithium secondary battery may be useful for portable devices such as a cellular phone, a laptop computer and a digital camera, and electric vehicle fields such as a hybrid electric vehicle (HEV).

Accordingly, the lithium secondary battery, a battery module including the lithium secondary battery as a unit cell, and a battery pack including the same may be provided.

The battery module or the battery pack may be used as the power source of one or more large- and medium-sized devices including: a power tool; electric motor vehicles including an electric vehicle (EV), a hybrid electric vehicle and a plug-in hybrid electric vehicle (PHEV); and a power storage system.

Hereinafter, embodiments will be explained in detail to particularly explain the present invention. However, the embodiments are for illustrating the present invention and the scope of the present invention should not be limited thereto.

### Examples

### Example 1

0.675 wt% of polyvinylpyrrolidone (PVP K15, product of Zhangzhou Huafu Chemical Co.), 0.225 wt% of sodium lignosulfonate (Borregaard Co.) and water as a dispersion medium were mixed to prepare 497 g of a mixture. In a dissolver (VMA-Getzmann Co., Dispermat-CA), an impeller and a vessel were installed and rotated at 400 rpm for 10 minutes to mix the dispersants and the dispersion medium in the mixture.

0.6 wt% of single-walled carbon nanotubes (SWCNT, TUBALL, product of OCSiAl Co.) with a specific surface area of 1,160 m²/g and a length of 5 µm or more, were injected thereto and dispersed at 8,000 rpm for 60 minutes.

The resultant was treated under a pressure of 20,000 psi five times using a high-pressure disperser (PICOMAX, Micronox Co.) to prepare a carbon nanotube dispersion.

### Example 2

A carbon nanotube dispersion was prepared by the same method as in Example 1 except for changing the polyvinylpyrrolidone content to 1.125 wt%, the sodium lignosulfonate content to 0.375 wt%, and the single-walled carbon nanotube content to 1.0 wt% in Example 1.

### Example 3

A carbon nanotube dispersion was prepared by the same method as in Example 1 except for changing the polyvinylpyrrolidone content to 1.0 wt%, the sodium lignosulfonate content to 0.5 wt%, and the single-walled carbon nanotube content to 1.0 wt% in Example 1.

### Example 4

A carbon nanotube dispersion was prepared by the same method as in Example 1 except for changing the polyvinylpyrrolidone content to 1.2 wt%, the sodium lignosulfonate content to 0.3 wt%, and the single-walled carbon nanotube content to 1.0 wt% in Example 1.

### Example 5

A carbon nanotube dispersion was prepared by the same method as in Example 1 except for changing the polyvinylpyrrolidone content to 1.25 wt%, the sodium lignosulfonate content to 0.25 wt%, and the single-walled carbon nanotube content to 1.0 wt% in Example 1.

### Comparative Example 1

A carbon nanotube dispersion was prepared by the same method as in Example 1 except for excluding sodium lignosulfonate and changing the polyvinylpyrrolidone content to 0.9 wt% in Example 1.

### Comparative Example 2

A carbon nanotube dispersion was prepared by the same method as in Example 1 except for using tristyrylphenol ethoxylate with the same content instead of the sodium lignosulfonate in Example 1.

### Comparative Example 3

A carbon nanotube dispersion was prepared by the same method as in Example 1 except for using a styrene maleic acid copolymer with the same content instead of the sodium lignosulfonate in Example 1.

### Comparative Example 4

A carbon nanotube dispersion was prepared by the same method as in Example 1 except for excluding polyvinylpyrrolidone and changing the sodium lignosulfonate content to 0.9 wt% in Example 1.

### Comparative Example 5

A carbon nanotube dispersion was prepared by the same method as in Example 1 except for changing the polyvinylpyrrolidone content to 0.75 wt%, the sodium lignosulfonate content to 0.75 wt%, and the single-walled carbon nanotube content to 1.0 wt% in Example 1.

### Comparative Example 6

A carbon nanotube dispersion was prepared by the same method as in Example 1 except for changing the polyvinylpyrrolidone content to 1.4 wt%, the sodium lignosulfonate content to 0.1 wt%, and the single-walled carbon nanotube content to 1.0 wt% in Example 1.

### Comparative Example 7

A carbon nanotube dispersion was prepared by the same method as in Example 1 except for using polyglyceryl-3-diisostearate with the same content instead of the polyvinylpyrrolidone in Example 1.

### Comparative Example 8

A carbon nanotube dispersion was prepared by the same method as in Example 1 except for using epigallocatechin gallate with the same content instead of the sodium lignosulfonate in Example 1.

**[Table 1]**

| | CNT conte nt (wt%) | First dispersant (polymer) | | Second dispersant | | Ratio between dispersa nts | CNT to dispe rsant s |
|---|---|---|---|---|---|---|---|
| | | Type | Amount (wt%) | Type | Amount (wt%) | | |
| Example 1 | 0.6 | PVP | 0.675 | Sodium lignosulf onate | 0.225 | 1:0.333 | 1:1.5 |
| Example 2 | 1.0 | PVP | 1.125 | Sodium lignosulf onate | 0.375 | 1:0.333 | 1:1.5 |
| Example 3 | 1.0 | PVP | 1.000 | Sodium lignosulf onate | 0.500 | 1: 0.5 | 1:1.5 |
| Example 4 | 1.0 | PVP | 1.200 | Sodium lignosulf onate | 0.300 | 1:0.25 | 1:1.5 |
| Example 5 | 1.0 | PVP | 1.250 | Sodium lignosulf onate | 0.250 | 1: 0.2 | 1:1.5 |
| Comparative Example 1 | 0.6 | PVP | 0.900 | - | - | - | 1:1.5 |
| Comparative Example 2 | 0.6 | PVP | 0.675 | Tristyryl phenol ethoxylat e | 0.225 | 1:0.333 | 1:1.5 |
| Comparative Example 3 | 0.6 | PVP | 0.675 | Styrene maleic acid copolymer | 0.225 | 1:0.333 | 1:1.5 |
| Comparative Example 4 | 0.6 | - | - | Sodium lignosulf onate | 0.900 | - | 1:1.5 |
| Comparative Example 5 | 1.0 | PVP | 0.750 | Sodium lignosulf onate | 0.750 | 1:1 | 1:1.5 |
| Comparative Example 6 | 1.0 | PVP | 1.400 | Sodium lignosulf onate | 0.100 | 1:0.0071 | 1:1.5 |
| Comparative Example 7 | 0.6 | PG-3-DIS | 0.675 | Sodium lignosulf onate | 0.225 | 1:0.333 | 1:1.5 |
| Comparative Example 8 | 0.6 | PVP | 0.675 | Epigalloc atechin gallate | 0.225 | 1:0.333 | 1:1.5 |

| | | | | | | | |
|---|---|---|---|---|---|---|---|
| * PVP: polyvinylpyrrolidone * PG-3-DIS: polyglyceryl-3-diisostearate | | | | | | | |

### Experimental Example

With respect to the carbon nanotube dispersions prepared in Examples 1 to 5 and Comparative Examples 1 to 8, initial viscosity after dispersion, and viscosity after standing at 25°C for 1 week were measured, and the results are shown in Table 2 below.

The viscosity was measured at 25°C using Rotor 1 at 1 rpm using a viscometer (TV-25, product of TOKI Co.).

**[Table 2]**

| | CNT conte nt (wt%) | Viscosity (cP) | | | | Ratio between dispersa nts | CNT to disper sants |
|---|---|---|---|---|---|---|---|
| | | Initial after dispersion | | After 1 week | Increas e ratio (%) | | |
| Example 1 | 0.6 | 7,200 | | 7,200 | 0 | 1:0.333 | 1:1.5 |
| Example 2 | 1.0 | 9, 800 | | 9, 800 | 0 | 1:0.333 | 1:1.5 |
| Example 3 | 1.0 | 13,000 | | 13,700 | 5 | 1:0.500 | 1:1.5 |
| Example 4 | 1.0 | 9, 000 | | 9,400 | 4 | 1: 0.250 | 1:1.5 |
| Example 5 | 1.0 | 14,100 | | 14,700 | 4 | 1:0.200 | 1:1.5 |
| Comparative Example 1 | 0.6 | 12,000 | | 14, 600 | 22 | - | 1:1.5 |
| Comparative Example 2 | 0.6 | 18, 400 | | 24,500 | 33 | 1:0.333 | 1:1.5 |
| Comparative Example 3 | 0.6 | 9,700 | | 17,000 | 75 | 1:0.333 | 1:1.5 |
| Comparative Example 4 | 0.6 | 10,400 | | 13,000 | 25 | - | 1:1.5 |
| Comparative Example 5 | 1.0 | 14, 600 | | 18,000 | 23 | 1:1 | 1:1.5 |
| Comparative Example 6 | 1.0 | 17,000 | | 23,200 | 36 | 1:0.0071 | 1:1.5 |
| Comparative Example 7 | 0.6 | Impossible to measure viscosity | | | | 1:0.333 | 1:1.5 |
| Comparative Example 8 | 0.6 | 16,000 | 21,000 | | 31 | 1:0.333 | 1:1.5 |

Referring to Table 2 above, it could be confirmed that the viscosity after standing at 25°C for 1 week of the carbon nanotube dispersions in Examples 1 to 5 was not increased (Examples 1 and 2) or showed low levels (Examples 3 to 5). However, in the cases of Comparative Examples 1 to 8, the carbon nanotube dispersions all showed high viscosity increase ratios after standing at 25°C for 1 week after preparation.

Among them, though Comparative Examples 2, 3 and 8 are examples using a second dispersant together with PVP as the first dispersant like in the Examples, markedly high viscosity increasing ratios, and high viscosity of carbon nanotube dispersions after standing at 25°C for 1 week were shown compared to Examples 1 to 5, and high viscosity increasing ratios were shown even compared to Comparative Example 1 or 4, in which one type of the dispersant was used. In addition, in the case of Comparative Example 7 using the first dispersant that is a different type instead of PVP, the viscosity itself was high, and the measurement of the viscosity was impossible. Through this, it was confirmed that, though two types of dispersants are used, effects are changed according to the types of the dispersants.

Particularly, it could be confirmed that if a compound containing a sulfonic acid group, a hydroxyl group and an aromatic ring is applied as the second dispersant together with the dispersant containing an N-atom as the first dispersant like in Examples 1 to 5, excellent dispersibility was exhibited, and the increase of viscosity could be effectively suppressed, but if a compound containing only a hydroxyl group and an aromatic ring (tristyrylphenol ethoxylate and epigallocatechin gallate) is applied like in Comparative Example 2 and Comparative Example 8, or if a compound containing only an aromatic ring is applied like in Comparative Example 3, the increasing effect of dispersibility was not shown. Likewise, in the case of Comparative Example 7 in which the same second dispersant was used but PG-3-DIS not containing an N atom was used as the first dispersant, dispersion itself was not easy, and the dispersant did not provide sufficient degree of dispersibility.

Meanwhile, in the case of Comparative Example 5, the types of the first dispersant and the second dispersant were the same as those in Examples 1 to 5, and the injection amount of the dispersant to CNT was the same, but the amount used of the second dispersant to the first dispersant was excessive from a proper range, and the amount used of the second dispersant was excessive. Accordingly, similar or somewhat higher level of the increasing ratio of viscosity than Comparative Example 1 were shown, and it could be confirmed that the amount ratio of the first dispersant and the second dispersant is required to satisfy a proper ratio.

In contrast to Comparative Example 5, in the case of Comparative Example 6, the amount used of the second dispersant to the first dispersant was less than a proper range, and Comparative Example 6 also showed high initial viscosity and high increasing ratio of viscosity, and it could be confirmed that the target effects of the present invention can be accomplished only if the proper amount ratio of the first dispersant and the second dispersant is satisfied.

## Claims

1. A carbon nanotube dispersion comprising carbon nanotubes, a dispersant and a dispersion medium, wherein
the dispersant comprises a first dispersant and a second dispersant in a weight ratio of 100:10 to 100:90,
the first dispersant is a dispersant comprising an N atom, the second dispersant is a compound comprising a sulfonic acid group, a hydroxyl group and an aromatic ring in a molecular structure, and
a weight ratio of the carbon nanotubes and the dispersant is 100:50 to 100:500.

2. The carbon nanotube dispersion according to claim 1, wherein a specific surface area (BET) of the carbon nanotubes is 800 m²/g or more.

3. The carbon nanotube dispersion according to claim 1, wherein the carbon nanotubes are single-walled carbon nanotubes.

4. The carbon nanotube dispersion according to claim 1, wherein 0.1 parts by weight to 5 parts by weight of the carbon nanotubes are comprised on the basis of 100 parts by weight of the carbon nanotube dispersion.

5. The carbon nanotube dispersion according to claim 1, wherein the first dispersant is one or more selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, and polyethylenimine.

6. The carbon nanotube dispersion according to claim 1, wherein the second dispersant is a lignosulfonate compound.

7. The carbon nanotube dispersion according to claim 1, wherein the second dispersant is sodium lignosulfonate, calcium lignosulfonate, or a mixture thereof.

8. The carbon nanotube dispersion according to claim 1, wherein the dispersant comprises the first dispersant and the second dispersant in a weight ratio of 100:20 to 100:80.

9. The carbon nanotube dispersion according to claim 1, wherein a weight ratio of the carbon nanotubes and the dispersant is 100:100 to 100:300.

10. The carbon nanotube dispersion according to claim 1, wherein a weight ratio of the carbon nanotubes and the dispersant is 100:120 to 100:250.

11. The carbon nanotube dispersion according to claim 1, wherein the dispersion medium is one or more selected from the group consisting of an amide-based polar organic solvent, an alcohol-based solvent, a glycol-based solvent, a glycol ether-based solvent, a ketone-based solvent, an ester-based solvent, and an aqueous solvent.

12. The carbon nanotube dispersion according to claim 1, wherein a viscosity of the carbon nanotube dispersion is 1,000 cP to 16,000 cP.

13. An electrode slurry composition for a lithium secondary battery, the composition comprising the carbon nanotube dispersion according to claim 1 and an electrode active material.

14. A method for preparing the carbon nanotube dispersion of claim 1, the method comprising:
(1) a step of mixing carbon nanotubes, a dispersant and a dispersion medium to prepare a mixture; and
(2) a step of dispersing the mixture, wherein
the dispersant comprises a first dispersant and a second dispersant in a weight ratio of 100:10 to 100:90,
the first dispersant is a dispersant comprising an N atom, the second dispersant is a compound comprising a sulfonic acid group, a hydroxyl group and an aromatic ring in a molecular structure, and
a weight ratio of the carbon nanotubes and the dispersant is 100:50 to 100:500.
